Europäisches Patentamt

European Patent Office

Office européen des brevets

(19)

(11) Publication number: **0 032 064**
**B1**

(12) **EUROPEAN PATENT SPECIFICATION**

(45) Date of publication of patent specification: **05.10.83**

(51) Int. Cl.³: **B 01 J 8/00, C 10 G 11/18**

(21) Application number: **80304753.9**

(22) Date of filing: **30.12.80**

(54) **System for the continuous conveyance of catalyst from a fluidized bed in a regenerator.**

(30) Priority: **31.12.79 US 108558**

(43) Date of publication of application:
**15.07.81 Bulletin 81/28**

(45) Publication of the grant of the patent:
**05.10.83 Bulletin 83/40**

(84) Designated Contracting States:
**BE DE FR GB IT NL**

(56) References cited:
**DE - A - 1 936 107**
**DE - A - 2 134 238**
**DE - B - 1 033 617**
**DE - B - 1 248 843**
**FR - A - 986 291**
**US - A - 3 149 924**
**US - A - 3 964 876**

(73) Proprietor: **Exxon Research and Engineering Company**
**P.O.Box 390 180 Park Avenue**
**Florham Park New Jersey 07932 (US)**

(72) Inventor: **Luckenbach, Edward Cooper**
**339 Forest Hill Way**
**Mountainside New Jersey (US)**
Inventor: **Worley, Arthur Christian**
**16 Eldridge Road**
**Mt Tabor New Jersey (US)**

(74) Representative: **Somers, Harold Arnold et al,**
**ESSO Engineering (Europe) Ltd. Patents &**
**Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

System for the continuous conveyance of catalyst from a fluidized bed in a
regenerator

The present invention relates to a system for the continuous conveyance of catalyst from a fluidized bed in a regenerator.

The catalytic cracking of hydrocarbons is performed in a tubular reactor wherein hydrocarbons to be processed are passed over particulate catalyst material to initiate the cracking process. Catalyst utilized in this process becomes contaminated with hydrocarbons and byproducts of the cracking of hydrocarbons. Such catalyst is removed from the reactor, and, rather than being discarded, the catalyst is transferred to a regenerator. The catalyst can be regenerated in a fluidized bed regenerator vessel by subjecting the particulate catalyst to an oxidizing gas stream with the release of heat. The regeneration process oxidizes carbon from the catalyst in order that the catalyst can be recycled through the hydrocarbon cracking reactor. The catalyst emanating from a fluidized bed regenerator vessel can be very hot and may be under high pressure. Such an environment is generally necessary for the regeneration process. The removal of regenerated catalyst under such conditions creates a problem of erosion due to pressure losses in the conduits emptying the regenerated catalyst. Various apparatus have been used to control such unloading of catalyst regenerators. Such apparatus have suffered from the attendant problems of apparatus erosion caused by the hot, reactive, particulate catalysts used in hydrocarbon cracking processes and the losses of fluidization in the regenerator catalyst beds due to equipment deterioration under such an erosive environment.

B. The prior art

The prior art has attempted to provide various solutions to the problems in recycling of cracking catalyst and its removal from regenerating vessels. These concepts have incorporated the use of various valves, piping arrangements and multiple flow paths.

In U.S. 3,342,561, a catalytic hydrocarbon furnace is disclosed which has a circuitous flow path for catalytic discharging from the reactor portion of the furnace downwardly to the lower portion of a regenerator section. At that point, the regenerating catalyst is fluidized upwardly through the section and separated in a cyclone separator, before re-entering the furnace reactor. This patent fails to provide a reservoir for the catalyst and is dependent upon precise flow of the catalyst at all times. In addition, pressure conditions within the reactor are dependent upon the valve control of the carbonized catalyst return conduit to the regenerator section. Erosion problems are attendant with such a valve system.

In U.S. 3,904,548, a hydrocarbon reactor and catalyst regenerator system is demonstrated, which provides a direct downward flow of regenerated catalyst to a reactor. The catalyst flows upward through the reactor and re-enters the regenerator by gravity. The catalyst flow from the regenerator to the reactor is controlled by a valve. Such a system fails to provide a separation of the pressurized, fluidized zones of the regenerator and reactor. In addition, the supply of catalyst to the reactor is dependent upon the operation of a valve, which is subject to the characteristically erosive conditions of hot fluidized catalyst.

In U.S. 3,964,876, a regeneration system is disclosed which has a multiplicity of return conduits for providing regenerated catalyst to a vertical, tubular hydrocarbon reactor zone. The return conduits are designed with a downward gravity flow directly to the reactor zone, which is controlled by valves placed on the respective flow paths. Such a system requires that the control of catalyst flow depends entirely on typical valving which is subject to erosive conditions and provides only direct supply of catalyst material from the regenerator to the hydrocarbon reactor.

In U.S. 3,494,858 a regenerator-reactor system is provided which utilizes a downwardly curved conduit flowpath for catalyst transported from the regenerator to the reactor and back again. The system uses such a flowpath to maintain a fluid seal during the catalyst conveyance from one vessel to the other. Slow curving piping used in the erosive environment of hot fluidized catalyst tends to produce abnormal wear of the internal surfaces of the conduit pipe.

Other prior art patents of general relevance to regenerated catalyst flow systems include U.S. 3,149,924, U.S. 3,617,496; and U.S. 3,886,060.

DE—B—1248843 discloses a regenerator system for a hydrocarbon cracking catalyst comprising a regenerator vessel for containing a fluidized bed of particulate catalyst, a discharge conduit connected at one end to the regenerator vessel below the upper level of the fluidized bed and downwardly inclined away from the regenerator vessel, an upwardly-extending carrier pipe (which functions as a transfer-line reactor) connected at its bottom end to a lower portion of the discharge conduit, the carrier pipe having a refractory internal lining, a catalyst conduit having one end connected to the top end of the carrier pipe and the other end connected to a vessel (which functions as a catalyst stripper) for receiving catalyst.

Summary of the invention

The present invention is directed to a regenerated catalyst conveyance system which overcomes the problems inherent in such prior art catalyst systems as identified above and which achieves the continuous controlled flow of catalyst which the prior art efforts have specifically failed to provide.

It is an object of this invention to accomplish the direct withdrawal of regenerated catalyst from a fluidized bed regenerator vessel in a continuous manner without the normally attendant problems of erosion and equipment failure, which have plagued the prior art systems.

It is an object of the present invention to preserve pressurized conditions in the regenerator vessel during continuous catalyst removal by the use of a system incorporating integral pressure restriction means without the necessity for sole reliance on erodable valves to effect a pressure drop.

Another object of the present invention is to provide a special refractory conduit for the regenerated catalyst flowpath, which eliminates moving parts and utilizes a cast-in-place refractory lining for the conveyance of catalyst, which conduit is reinforced with metallic wire fibers.

It is yet another object of the present invention to utilize right angle conduit joints in the conveyance system where a change in the conduit flowpath is necessary.

A further object of the present invention is to prevent erosion of the pressure restriction portion of the catalyst conveyance system by use of a refractory lining, which is made and maintained by simple cast-in-place techniques.

These objects and others are achieved by the present invention which provides a regenerator system for a hydrocarbon cracking catalyst comprising a regenerator vessel for containing a fluidized bed of particulate catalyst, a discharge conduit connected at one end to the regenerator vessel below the upper level of the fluidized bed and downwardly inclined away from the regenerator vessel, an upwardly-extending carrier pipe connected at its bottom end to a lower portion of the discharge conduit, the carrier pipe having a refractory internal lining, a catalyst conduit having one end connected to the top end of the carrier pipe and the other end connected to a vessel for receiving catalyst, characterized in that the said refractory internal lining extends substantially uniformly within the carrier pipe and forms an erosion-resistant lining which defines and maintains a reduced internal bore of the carrier pipe so as to control the flow of catalyst through the carrier pipe.

Thus the invention provides a system comprising a conveyance system for removing particulate catalyst from the fluidized bed of a regenerator vessel with a downwardly directed discharge conduit which leads from the lower portion of said vessel and is connected at its lower end to a substantially vertical, refractory lined carrier pipe, which is aligned with a fluidization means for conveying particulate catalyst through said refractory lined pipe.

The discharge conduit is of a relatively large diameter in order to prevent catalyst plugging of the conveyance system. A gate valve is located within this conduit. The valve is used to close the conveyance system during shutdown of said system, but its operation is not necessary for the control of regenerated catalyst flow. Nor is the valve required to maintain the pressure of the regenerator vessel's fluidized bed.

Control of catalyst flow in the present invention is performed by the fluidization means aligned with the vertical refractory lined pipe, while the pressure level of the system is maintained by the reduced internal diameter of the pipe created by the refractory lining. Because the refractory lining of said pipe functions as the pressure restriction for the conveyance system, with the attendant stress of extreme heat and erosion conditions, it is provided with metallic fiber wire reinforcement consisting of short lengths of fine metal fibers.

The refractory lined pipe is connected at its down-stream end to appropriate conduits which transport the catalyst to a spent catalyst hopper for recirculation to the hydrocarbon reactor. The conveyance system provides for pressure control of the regenerator vessel by a restrictive vertical flow path which is resistant to the erosive environment of fluidized catalyst and which is easily repaired and maintained by the casting of reinforced refractory material.

According to the present invention, catalyst is drawn off the main vessel in a fluidized leg and only a small amount of gas is supplied at the bottom of this leg to fluidize the catalyst and permit classification of the larger particles and tramp material. This unwanted material will settle to the bottom of this leg and can be removed periodically since the leg is provided with double block valves from the main vessel. The catalyst take off orientation is arranged with the small diameter part of the refractory filled line disposed so that catalyst is drawn off vertically upward or upward. This arrangement will prevent larger particles that come into the fluidized leg from settling by gravity on the entrance opening and plugging it, or if a particle happens to be lifted into the opening and plugs it, a simple back pressure will remove it. The particle will fall down into the lower fluidized leg which has sufficient volume to collect such particles. The air pick up stream downstream of the refractory section is relatively large and is supplied in sufficient quantity to quench the temperature of this catalyst so that relatively lower grade metallurgy, e.g., carbon steel, can be used in the line.

Brief description of the drawings

The invention is specifically exemplified by the drawings which are described below.

Fig. 1 is a schematic view of a catalyst conveyance system utilizing the instant invention therein.

Fig. 2 is a partial cross-sectional plan view

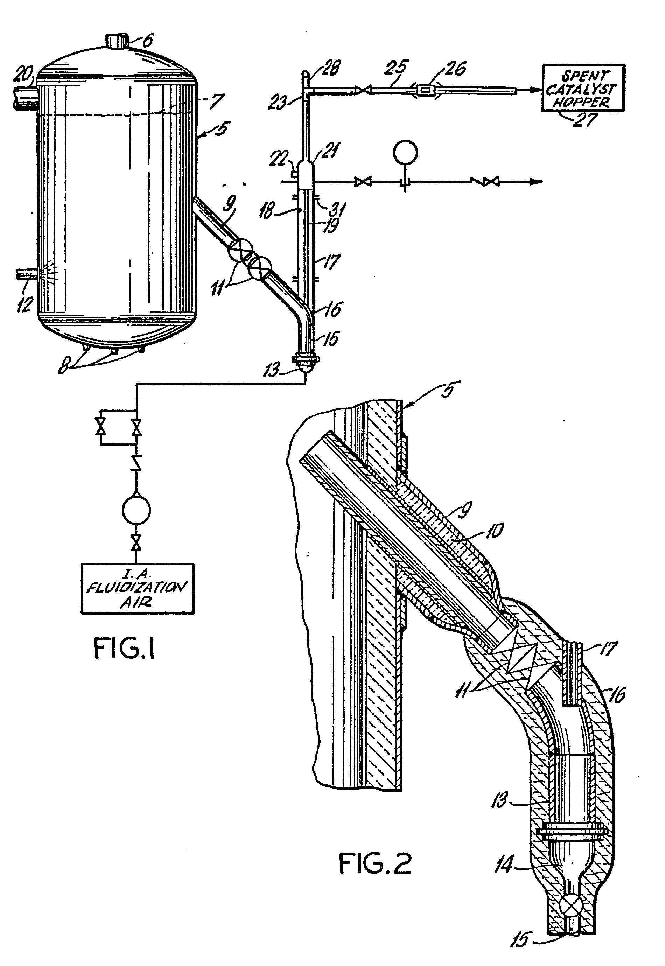

depicting the discharge conduit and gate valve of the system shown in Fig. 1.

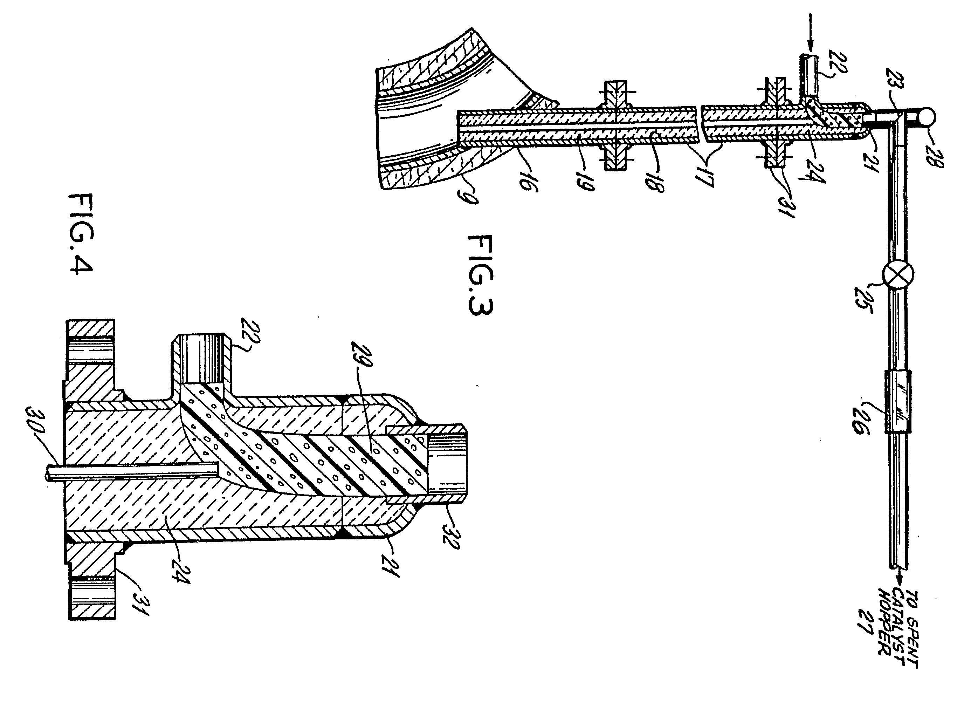

Fig. 3 is a partial cross-sectional plan view depicting the vertical refractory lined pipe of the system shown in Fig. 1.

Fig. 4 is a partial cross-sectional view of the upper portion of the pipe of Fig. 3.

Detailed description of a preferred embodiment of the invention

Fig. 1 shows a catalyst regenerator vessel 5 consisting of a large container which typically has an appropriate array of gas fluidization nozzles 8 and venting stacks 6 in order to maintain a fluidized bed of catalyst to be regenerated. The regenerator vessel also can have appropriate burners 12 for heating the catalyst, as well as a supply conduit 20 for introducing the catalyst to the vessel. These components can be of any applicable type and, because they do not form a part of the invention herein, they are not described in detail.

The catalyst being regenerated in the vessel 5 can be any particulate catalyst used in hydrocarbon cracking processes. The typical catalysts consist of the zeolites and other alumina silicate substrates having a high surface area due to their inherent rough, or porous physical dimensions. Such substrates become clogged or coated during the course of their catalytic use in the cracking of various hydrocarbons. When the catalyst bodies become clogged with such contaminants, they lose their efficiency in the hydrocarbon cracking process and must be replaced with fresh catalyst.

Because the catalyst material is of considerable economic value, it has become the practice to regenerate the catalyst which is being removed from the hydrocarbon cracking reactor. The catalyst can be regenerated by subjecting it to a heated, oxidizing environment which removes the hydrocarbon residues which have become adhered to the surface of such catalyst.

Therefore, in the complete processing of hydrocarbons in cracking reactions, the use of a circuitous flow of catalyst to and from the hydrocarbon cracking reactor itself is used. The catalyst cycles from the cracking reactor to a regeneration vessel and back again. However, the specific flow of catalyst must be regulated depending on a number of independent factors. These factors include the quality of the hydrocarbon being processed, the desired end product, the particular catalyst being utilized and the amount of regeneration time required to return the catalyst to its active state.

The catalyst is controlled and stored by gate valves and catalyst reservoirs utilized within the conveyance system in order to maintain catalyst flow and catalyst capacity when the catalyst is not immediately needed or in a condition to be utilized in the hydrocarbon reactor. The fluidized bed regeneration vessel 5 shown in Fig. 1 is well suited to both storing quantities of catalyst to be regenerated and providing the necessary environment for the regeneration of large quantities of catalyst at one time.

The regeneration of catalyst in the vessel 5 requires pressurized conditions up to 1379 kPa (200 psi) and elevated temperatures of 427 to 760°C (800° to 1400°F). Catalyst, which is maintained at these conditions, presents problems in its removal and conveyance to storage or to the hydrocarbon reactor. The catalyst is highly erosive to the apparatus with which it comes into contact due to its generally hard particulate nature and the conditions of elevated temperature and pressure which exist in the regeneration vessel and any apparatus communicating therewith. It is essential to provide conveyance apparatus which withstands such conditions, and yet, preserves the pressurized conditions of the regeneration vessel's fluidized bed and provides control over the flow of the regenerated catalyst.

In the present invention, as shown in Fig. 1, a discharge conduit 9 is connected at the lower portion of the regeneration vessel 5 so that it can remove regenerated catalyst by gravity flow of said catalyst. The specific location of the discharge conduit 9 is not critical as long as it is substantially below the upper level of the fluidized bed 7 of the regeneration vessel.

A pair of gate valves 11 are located in the discharge conduit 9 so that the vessel 5 can be shut off from the down-stream portion of the conveyance system. The discharge conduit descends downwardly away from the regeneration vessel and ends at the conduit terminus 13. A fluidization nozzle 15 is situated at the terminus 13 with its fluid stream directed upwardly in the lower section of the discharge conduit, which lower section is aligned in a generally vertical plane.

A vertically aligned carrier pipe 17 intersects and communicates with the discharge conduit 9 at a junction 16 directly above the flow path of the fluidization nozzle 15. The carrier pipe is specifically designed with a substantial vertical run or length, so as to provide control over the flow rate of catalyst and the pressure conditions of the system. The carrier pipe 17 is fitted with a cast-in-place refractory lining 19, which significantly reduces the effective internal diameter of the carrier pipe bore 18. These features of a reduced bore and a substantial vertical length give the carrier pipe 17 the ability to control regenerated catalyst flow, as well as to provide a pressure drop utilized to preserve pressurized conditions in the regeneration vessel 5. The carrier pipe head 21 has a carrier nozzle 22 which supplies supplemental fluidizing air. In addition, being vertically oriented with catalyst flow being upward, heavier materials and debris will not plug into the line as gravity will tend to separate these materials from the upflowing catalyst. This air stream assists the air stream from nozzle 15 in fluidizing and carrying the particulate catalyst along the conveyance system.

The carrier pipe 17 terminates in an elbow joint 23, which is designed to effect a right-angle turn in the flowpath of the carrier pipe. Such a turn creates a greater pressure drop and is less susceptible to erosion than less-angled conduit turns. The conveyance system continues with a catalyst conduit 25 of minimal length. The catalyst conduit 25 includes a sight glass 26 to allow visual inspection of line conditions. The conduit terminates at a spent catalyst hopper 27, which is not shown and does not form a part of the present invention.

Referring to Fig. 2, details of the discharge conduit 9 and the regeneration vessel are shown. The discharge conduit 9 is, preferably, a 15.24 cm (six inch) diameter pipe which exits the regeneration vessel at a 45° angle downwardly from the horizontal plane. The conduit has insulation 10 on the upper length of the outer surface. Two gate valves 11 are situated in the flowline of the discharge conduit above the junction 16 of the vertical carrier pipe 17. The valves can be 15.24 cm (6 inch) gate valves with stellited internal hardsurfacing. The discharge conduit terminates with a reduced neck 14 substantially below the junction of the carrier pipe. A fluidization nozzle 15 is located at the terminal end of the discharge conduit. This nozzle supplies a gas stream which is directed vertically toward the lower end or junction of the carrier pipe. Therefore, it is necessary that the section of the discharge conduits from the carrier junction 16 to the discharge conduit terminus 13 be a generally vertical, straight portion of pipe.

The fluidizing gas from the nozzle 15 catches the gravity fed catalyst in the discharge conduit and carries it in a fluidized condition upwardly through the carrier pipe 17.

Referring to Fig. 3, the carrier pipe 17 is shown with its junction 16 with the discharge conduit 9 and the catalyst conduit 25 which supplies a spent catalyst hopper 27. The carrier pipe 17 is, preferably, a 3 inch pipe, which is not provided with external insulation as is the case in the discharge conduit 9. The carrier pipe is lined with a cast-in-place refractory material 19. The refractory is reinforced with short lengths of metal wire fibers, which are incorporated into the refractory in the plastic state, prior to casting and curing. The refractory lining 19 reduces the diameter of the carrier pipe bore 18 to 0.952 cm (0.375 inches). The sections of the carrier pipe are connected by exterior flange members 31 which can be bolted together.

A carrier pipe head 21 is located at the upper end of the carrier pipe. This head includes an auxiliary air supply for fluidization and carrying of the regenerated particulate catalyst. The air or fluid is provided by carrier nozzle 22. This carrier air is of sufficient quantity to cool the hot catalyst to a point where carbon steel metallurgy is satisfactory. This nozzle originates in an internal area within the carrier pipe of increased diameter. This enlarged bore of the carrier pipe provides for rapid conveyance of the catalyst with minimal frictional drag. The function of pressure retention is accomplished by the lower portion of the carrier pipe with its reduced diameter and vertical length and thus continued restriction of the bore is not necessary.

The carrier pipe head connects with a right-angled elbow joint 23 which has an overall "tee" shape and an access means consisting of a pipe cap 28. This cap allows for maintenance of the carrier pipe and its refractory lining. The elbow joint communicates with a length of unlined pipe consisting of a catalyst conduit 25 having a sight glass of typical design. The catalyst conduit 25 terminates at a spent catalyst hopper 27 which consists of a vessel for retaining quantities of the regenerated catalyst. The catalyst can be drawn from said hopper as needed to replenish the hydrocarbon cracking reactor, which would be utilized with the conveyance system of this invention.

As shown in Fig. 4, the head of the carrier pipe 17 ends with a pipe stub 32. This stub provides a means for connecting the downstream portion of the conveyance system to the carrier pipe. The stub 32 is not refractory lined and in fact, marks the end of the refractory lined section of the system. As indicated in the drawing, the refractory material can be cast-in-place with the assistance of Styrofoam or plastic forms 29, 30, which simulate the bore of the carrier pipe in the main vertical length and the carrier nozzle area, respectively.

As stated above, the present invention utilizes the reduced diameter, refractory lined carrier pipe with its vertical flowpath to control catalyst flow and pressurization conditions. This is in contrast to the prior art devices, which utilize various valves for such control. The gate valves 11 of the present invention are not needed to control such functions, but are incorporated into the system for complete shutdown and for maintenance and emergency conditions. Erosion problems, particularly of the valves, are avoided by this system, which utilizes reinforced refractory lining of a simple construction for erosion resistance and as a flow restrictive element.

The refractory material is a hydraulic grade refractory typically having an alumina content in the range of 45—95% by weight and a water content in the range of 10.3—10.8% by weight. The refractory can be cast at a temperature of from 15.6 to 32.2°C (60°—90°F). After curing and dryout, the refractory should have a cold crushing strength of 34475 to 68950 kPa (5,000 to 10,000 psi).

The metal wire fibers which are added to the refractory during the mixing of the refractory prior to casting, are selected from the group comprising: 18/8 chrome-nickel alloy, 25/20 chrome-nickel alloy, 25/12 chrome-nickel alloy, 26 chrome alloy and carbon steel, depending on the conditions expected in the catalyst conveyance system. The metal wire fibers are added to the refractory in quantities of 2.2679 to 4.5359 kg/28.316 L (5—10 lbs per cubic foot of refractory). The metal fiber is sized so that it is in the range of 0.254 to 0.406 mm (0.010"—0.016") diameter by 1.904 to 25.4 mm (0.075"—1.0") in length. Reference is made to U.S. Patent No. 3,429,094 for further disclosure of suitable metal fiber-reinforced refractory material for use with present invention.

The carrier pipe 17 is constructed by assembling the desired lengths of 7.62 cm (3") flanged pipe into one continuous length. A pipe head 21 is then welded on the downstream end of the carrier pipe. Styrofoam or plastic forms 29, 30 are positioned within the bore 18 of the pipe. The form 30 for the reduced bore of the pipe's greater length is placed axially within the center of the bore. The form 29 for the carrier gas fluidization nozzle 22 is affixed within the aperture in the carrier head 21 for said nozzle and additionally is arranged so as to define the axial bore of the downstream end of the carrier pipe. The forms are chosen so that the latter form 29 provides an enlarged bore for the carrier pipe with respect to the form 30 which defines the greater portion or upstream area of the carrier pipe bore.

Metal wire fibers are then mixed with an appropriate refractory material. The refractory material is packed in the bore of the carrier pipe and carrier head so as not to alter the alignment of the Styrofoam or plastic forms 29, 30. After the setting of the refractory material, the forms can be removed by any practical method, including but not limited to the heat destruction of said forms. The carrier pipe is then finished by incidental sanding or filing of the rough portions of the cast-in-place refractory.

The invention has been described above with respect to a specific preferred embodiment. Obvious changes or modifications can be made by one skilled in the art without departing from the intended scope of the invention, which is defined by the following claims, which should not be limited to their literal terms, but should be construed in a manner commensurate with the breadth of the instant invention.

## Claims

1. A regenerator system for a hydrocarbon cracking catalyst comprising a regenerator vessel (5) for containing a fluidized bed of particulate catalyst, a discharge conduit (9) connected at one end to the regenerator vessel (5) below the upper level of the fluidized bed and downwardly inclined away from the regenerator vessel (5), an upwardly-extending carrier pipe (17) connected at its bottom end to a lower portion of the discharge conduit (9), the carrier pipe (17) having a refractory internal lining (19), a catalyst conduit (25) having one end connected to the top end of the carrier pipe (17) and the other end connected to a vessel (27) for receiving catalyst, characterized in that the said refractory internal lining (19) extends substantially uniformly within the carrier pipe (17) and forms an erosion-resistant lining which defines and maintains a reduced internal bore (18) of the carrier pipe (17) so as to control the flow of catalyst through the carrier pipe (17).

2. A system as in claim 1 characterized in that the bottom end of the carrier pipe (17) is connected to the top side of the discharge conduit (9) at a junction (16) directly above a fluidization nozzle (15) connected to the discharge conduit (9), the fluidization nozzle (15) serving to pass a fluidization gas into the discharge conduit (9) for fluidizing catalyst material upwardly into the carrier pipe (17) from the discharge conduit (9).

3. A system as in claim 2 characterized in that the discharge conduit (9) is downwardly bent at said junction (16).

4. A system as in any one of claims 1 to 3 characterized in that the top end of the carrier pipe (17) is connected to said one end of the catalyst conduit (25) by an elbow joint (23) which provides a substantially right-angled flow path.

5. A system as in claim 4 characterized in that the elbow joint (23) has an access cap (28) to provide access to the bore of the carrier pipe.

6. A system as in any one of claims 1 to 5 characterized in that the internal bore of the carrier pipe (17) is wider adjacent to the top end (21), and a nozzle (22) is connected to the carrier pipe for the infusion of a carrier fluid into the top end region of the carrier pipe (17) to cool hot catalyst and to convey said catalyst to said catalyst-receiving vessel (27).

7. A system as in any one of claims 1 to 6 characterized in that there is provided valve means (11) for closing the discharge conduit (9).

8. A system as in any one of claims 1 to 7 characterized in that the refractory internal lining (19) is a cast-in-place refractory material which is temperature-and erosion-resistant.

9. A system as in claim 8 characterized in that the cast-in-place refractory material comprises a hydraulic refractory material having an alumina content in the range of from 45 to 95 wt. %.

10. A system as in any one of claims 1 to 9 characterized in that the refractory lining (19) comprises fine metal wire fiber reinforcement.

11. A system as in claim 10 characterized in that the metal wire fiber reinforcement comprises 2.268 to 4.536 kg of wire per 28.32 litres (5 to 10 pounds per cubic foot) of refractory, and the wire has diameters selected from the range of from 0.254 to 0.406 mm (0.010 to 0.016") and lengths selected from the range of from 1.905 to 25.40 mm (0.075 to 1.0").

12. A system as in claim 10 or claim 11 characterized in that the metal of the wire is selected from the following alloys: 18/8 chrome-nickel; 25/20 chrome-nickel; 25/12 chrome-nickel; 26 chrome and carbon steel.

## Patentansprüche

1. Regeneratorsystem für einen Kohlenwasserstoff-Crackkatalysator mit einem Regeneratorkessel (5) zur Aufnahme eines Wirbelbetts aus teilchenförmigem Katalysator, mit einer mit einem Ende mit dem Regeneratorkessel (5) unter dem oberen Niveau des Wirbelbetts verbundenen und vom Regeneratorkessel (5) nach unten weg geneigten Abflußleitung (9) und mit einem sich nach oben erstreckenden, an seinem unteren Ende mit dem unteren Teil der Abflußleitung (9) verbundenen Transportrohr (17), wobei das Transportrohr (17) eine feuerfeste Innenauskleidung (19) und eine Katalysatorleitung (25) aufweist, die mit einem Ende mit dem oberen Ende des Transportrohres (17) und mit dem anderen Ende mit einem Gefäß (27) zur Aufnahme von Katalysator verbunden ist, dadurch gekennzeichnet, daß sich die feuerfeste Innenauskleidung (19) im wesentlichen gleichförmig in dem Transportrohr (17) erstreckt und eine erosionsbeständige Auskleidung bildet, die eine reduzierte Innenbohrung (18) des Trägerrohrs (17) bildet und aufrechterhält, um den Katalysatorstrom durch das Transportrohr (17) zu regulieren.

2. System nach Anspruch 1, dadurch gekennzeichnet, daß das untere Ende des Transportrohres (17) mit der Oberseite der Abflußleitung (9) an einem Berührungspunkt (16) direkt oberhalb einer mit de Abflußleitung (9) verbundenen Fluidisierungsdüse (15) verbunden ist, wobei die Fluidisierungsdüse (15) dazu dient, ein Fluidisierungsgas zum Fluidisieren des Katalysatormaterials aus der Abflußleitung (9) nach oben in die Transportleitung (17) in die Abflußleitung (9) zu leiten.

3. System nach Anspruch 2, dadurch gekennzeichnet, daß die Abflußleitung (9) an dem Berührungspunkt (16) nach unten gekrümmt ist.

4. System nach einem der Ansprüche 1 bis 3, dadurch gekennzeichnet, daß das obere Ende des Transportrohres (17) durch eine Krümmerverbindung mit dem einen Ende der Katalysatorleitung (25) verbunden ist, welche einen im wesentlichen rechtwinkligen Strömungsverlauf liefert.

5. System nach Anspruch 4, dadurch gekennzeichnet, daß die Krümmerverbindung (23) einen Zugangsaufsatz (28) aufweist, damit die Bohrung des Transportrohrs zugänglich ist.

6. System nach einem der Ansprüche 1 bis 5, dadurch gekennzeichnet, daß die Innenbohrung des Trägerrohrs (17) nahe dem oberen Ende (21) weiter ist und eine Düse (22) zur Einleitung eines Trägerfluids in den oberen Endbereich des Trägerrohrs (17) mit dem Transportrohr verbunden ist, um den heißen Katalysator zu kühlen und den Katalysator zu dem Katalysatoraufnahmegefäß (27) zu transportieren.

7. System nach einem der Ansprüche 1 bis 6, dadurch gekennzeichnet, daß eine Ventilvorrichtung (11) zum Schließen der Abflußleitung (9) vorhanden ist.

8. System nach einem der Ansprüche 1 bis 7, dadurch gekennzeichnet, daß die feuerfeste Innenauskleidung (19) ein an Ort und Stelle gegossenes feuerfestes Material ist, das temperatur- und erosionsbeständig ist.

9. System nach Anspruch 8, dadurch gekennzeichnet, daß das an Ort und Stelle gegossene feuerfeste Material ein hydraulisches feuerfestes Material mit einem Aluminiumoxidgehalt im Bereich von 45 bis 95 Gew. % umfaßt.

10. System nach einem der Ansprüche 1 bis 9, dadurch gekennzeichnet, daß die feuerfeste Auskleidung (19) mit feinen Metalldrahtfasern verstärkt ist.

11. System nach Anspruch 10, dadurch gekennzeichnet, daß die Metalldrahtfaserverstärkung 2,268 bis 4,536 kg Draht je 28,32 l feuerfestes Material beträgt und der Draht Durchmesser ausgewählt aus dem Bereich von 0,254 bis 0,406 mm und Längen ausgewählt aus dem Bereich von 1,905 bis 25,40 mm besitzt.

12. System nach Anspruch 10 oder 11, dadurch gekennzeichnet, daß das Metall des Drahtes ausgewählt ist aus den folgenden Legierungen: 18/8 Chrom-Nickel, 25/20 Chrom-Nickel, 25/12 Chrom-Nickel, 26 Chrom- und Kohlenstoffstahl.

## Revendications

1. Système régénérateur pour catalyseur de craquage d'hydrocarbures comprenant un récipient régénérateur (5) destiné à contenir un lit fluidisé de catalyseur en particules, un conduit de décharge (9) relié par une extrémité au récipient régénérateur (5) au-dessous du niveau supérieur du lit fluidisé et incliné vers le bas à partir du récipient régénérateur (5), un tuyau transporteur s'étendant vers le haut (17) relié par son extrémité inférieure à une partie inférieure du conduit de décharge (9), le tuyau transporteur (17) ayant un garnissage interne réfractaire (19), un conduit de catalyseur (25) ayant une première extrémité reliée à l'extrémité supérieure du tuyau transporteur (17) et l'autre extrémité reliée à un récipient (27) destiné à recevoir le catalyseur, caractérisé en ce que ledit garnissage interne réfractaire (19) s'étend à peu près uniformément à l'intérieur du tuyau transporteur (17) et forme un garnissage résistant à l'érosion qui définit et maintient un alésage interne réduit (18) du tuyau transporteur (17) de façon à régler l'écoulement du catalyseur à travers le tuyau transporteur (17).

2. Système selon la revendication 1 caractérisé en ce que l'extrémité inférieure du tuyau transporteur (17) est reliée au côté supérieure du conduit de décharge (9) par une jonction (16) directement superposée à un ajutage de fluidisation (15) relié au conduit de décharge (9), l'ajutage de fluidisation (15) servant à introduire un gaz de fluidisation dans le conduit de décharge (9) pour faire passer de bas en haut par fluidisation du matériau catalyseur dans le tuyau transporteur (17) à partir du conduit de décharge (9).

3. Système selon la revendication 2, caractérisé en ce que le conduit de décharge (9) est coudé vers le bas au niveau de ladite jonction (16).

4. Système selon l'une quelconque des revendications 1 à 3, caractérisé en ce que l'extrémité supérieure du tuyau transporteur (17) est reliée à ladite première extrémité du conduit de catalyseur (25) par un raccord coudé (23) qui fournit un trajet d'écoulement sensiblement d'équerre.

5. Système selon la revendication 4, caractérisé en ce que le raccord coudé (23) a un chapeau d'accès (28) pour donner accès à l'alésage du tuyau transporteur.

6. Système selon l'une quelconque des revendications 1 à 5, caractérisé en ce que l'alésage interne du tuyau transporteur (17) est plus large à l'extrémite supérieure (21), et un ajutage (22) est relié au tuyau transporteur pour infuser un fluide porteur dans la région extrême supérieure du tuyau transporteur (17) afin de refroidir le catalyseur chaud et de transporter ledit catalyseur jusqu'audit récipient de réception de catalyseur (27).

7. Système selon l'une quelconque des revendications 1 à 6, caractérisé en ce qu'il est prévu un moyen à vanne (11) pour la fermeture du conduit de décharge (9).

8. Système selon l'une quelconque des revendications 1 à 7, caractérisé en ce que le garnissage interne réfractaire (19) est un matériau réfractaire coulé sur place qui résiste à la chaleur et à l'érosion.

9. Système selon la revendication 8, caractérisé en ce que le matériau réfractaire coulé sur place comprend un matériau réfractaire ayant une teneur en alumine comprise entre 45 et 95% en poids.

10. Système selon l'une quelconque des revendications 1 à 9, caractérisé en ce que le garnissage réfractaire (19) comprend une armature de fibre de fil métallique fin.

11. Système selon la revendication 10, caractérisé en ce que l'armature de fibre de fil métallique fin est constituée par 2,268 à 4,536 kg de fil métallique par 28,32 litres de réfractaire, et le fil métallique a des diamètres choisis dans la gamme de 0,254 à 0,406 mm et des longueurs choisies dans la gamme de 1,905 à 25,40 mm.

12. Système selon la revendication 10 ou 11, caractérisé en ce que le métal du fil est choisi parmi les alliages suivants: chrome-nickel 18/8; chrome-nickel 25/20; chrome-nickel 25/12; alliage de chrome 26 et acier au carbone.

FIG.1

FIG.2

1

FIG.3

FIG.4